# EUROPÄISCHE PATENTSCHRIFT

(11) **EP 2 510 266 B1**
(45) Veröffentlichungstag und Bekanntmachung des Hinweises auf die Patenterteilung: **07.12.2016**
(21) Anmeldenummer: 11707581.2
(22) Anmeldetag: 24.02.2011
(51) Int. Cl.: F16K 11/07, F15B 13/04

(54) **MEHRWEGEVENTIL**
MULTI-WAY VALVE
DISTRIBUTEUR MULTIVOIE

(30) Priorität: 03.03.2010 DE 102010010061
(43) Veröffentlichungstag der Anmeldung: 17.10.2012
(73) Patentinhaber: Festo AG & Co. KG, 73734 Esslingen (DE)
(72) Erfinder: SCHWENZER, Reinhard, 73734 Esslingen (DE); GOMMEL, Gerhard, 73274 Notzingen (DE)
(74) Vertreter: Patentanwälte Magenbauer & Kollegen Partnerschaft mbB
(86) Internationale Anmeldenummer: PCT/EP2011/000889
(87) Internationale Veröffentlichungsnummer: WO 2011/107235

(56) Entgegenhaltungen:
- EP-A1- 1 559 937
- JP-A- 9 159 036
- US-A- 1 820 653
- US-A- 4 254 799
- US-A- 4 593 719

## Beschreibung

Die Erfindung betrifft ein Mehrwegeventil, mit einem Ventilgehäuse, in dem sich eine von einer peripheren Wandfläche begrenzte längliche Steuerkammer befindet, in der ein Ventilschieber axial verschiebbar angeordnet ist, der an wenigstens einem Endbereich einen einen Längenabschnitt der peripheren Wandfläche abdeckenden Lagerabschnitt aufweist, an den sich ein Stegabschnitt geringeren Querschnittes anschließt, wobei an der peripheren Wandfläche ein zur Einspeisung eines Druckfluides dienender Speisekanal mit mindestens einer Speiseöffnung einmündet, wobei der Ventilschieber zumindest partiell derart elastisch biegbar ausgebildet ist, dass der Lagerabschnitt relativ zu mindestens einem anderen, sich an der peripheren Wandfläche der Steuerkammer abstützenden Abschnitt des Ventilschiebers verbiegbar ist.

Bei einem als Hydraulikventil ausgebildeten Mehrwegeventil, das aus der US 4,450,865 hervorgeht, verfügt der Ventilschieber an beiden Endbereichen über je einen Lagerabschnitt, der zugleich als Steuerabschnitt fungiert, um über einen Speisekanal zugeführtes Drucköl wahlweise an einen Verbraucher weiterzuleiten oder von dem Verbraucher abzusperren. Der Ventilschieber ist hartdichtend ausgeführt, so dass er ohne zusätzliche elastomere Dichtungsmittel mit der ihn umschließenden peripheren Wandfläche des Ventilgehäuses zusammenwirkt. Das bekannte Mehrwegeventil ist als 4/3-Wegeventil konzipiert und ermöglicht es, zwei zu einem Verbraucher führende Arbeitskanäle im von dem Speisekanal abgetrennten Zustand mit einem zu einem Tank führenden Entlastungskanal zu verbinden.

Ein Grundproblem bei derartigen Mehrwegeventilen besteht darin, dass hartdichtende Ventilkonzepte zur Vermeidung von Leckage mit sehr engen Radialspalten zwischen dem Ventilschieber und der Wandfläche der den Ventilschieber aufnehmenden Steuerkammer konzipiert werden müssen. Im Idealzustand sind die Ventilschieber bei derartigen Ventilkonzepten druckausgeglichen und wenig reibungsbehaftet. Infolge von fertigungsbedingten Formfehlern oder bedingt durch ein Verkippen des Ventilschiebers in der Steuerkammer können allerdings radial wirkende Druckkräfte nur unzureichend ausgeglichen werden. Bei Druckbeaufschlagung können somit erhebliche Reibungs- und Klemmkräfte verursacht werden, die die Funktionsfähigkeit und die Lebensdauer beeinträchtigen.

Durch besonders aufwendige Fertigungsverfahren und die Vorgabe sehr enger Fertigungstoleranzen lassen sich zwar fertigungsbedingte Formfehler weitestgehend ausschließen. Gleichwohl lässt sich eine exakt geradlinige Formgebung des Ventilschiebers in aller Regel nicht verwirklichen, so dass er normalerweise eine, wenn auch nur wenige Mikrometer starke, Durchbiegung aufweist. Die Folge hiervon ist, dass der in der Steuerkammer installierte Ventilschieber eine leichte Schrägstellung aufweist, so dass radial zwischen den Lagerabschnitten und den von den Lagerabschnitten abgedeckten Längenabschnitten der Wandfläche der Steuerkammer Zwischenräume mit keilförmiger Querschnittsform auftreten, die bei Fluidbeaufschlagung eine asymmetrische Druckverteilung und infolgedessen druckproportionale Querkräfte auf den Ventilschieber hervorrufen. Dies führt zu einem gewissen Verklemmen des Ventilschiebers in der Steuerkammer, was einen erhöhten Verschleiß zur Folge hat und sich, vor allem bei Proportionalventilen, nachteilig auf die Positioniergenauigkeit des Ventilschiebers auswirkt.

Soweit der Anmelderin bekannt ist, wird bei klassischen hartdichtenden Proportional- oder Servoventilen einer asymmetrischen Druckverteilung auch schon dadurch entgegengewirkt, dass am Außenumfang des Lagerabschnittes axial beabstandete nutförmige Druckentlastungsrillen ausgebildet werden. Allerdings gelingt hiermit der angestrebte Druckausgleich nur sehr unvollständig.

Aus der DE 10 2004 057 520 A1 ist bereits ein Ventil bekannt, dessen Ventilschieber einen Steuerbund aufweist, der gemeinsam mit einem Dichtsteg einer Ventilbuchse einen Dichtspalt begrenzt. Der Dichtsteg ist mit einer Schrägfläche ausgeführt, die so gestaltet ist, dass bei einer einseitigen Druckbeaufschlagung des Dichtsteges eine Verformung auftritt, aus der ein den Ventilschieber stabilisierender Keilspalt resultiert. Bei Ventilen der gattungsgemäßen Art gemäß US 4,450,865 sind es aber gerade sich ausbildende Keilspalte, die zu den geschilderten Problemen führen.

Die US 4 254 799 A offenbart ein Ventil der eingangs genannten Art, dessen Ventilschieber zwei Endabschnitte aufweist, die flexibel miteinander verbunden sind, beispielsweise mittels eines flexiblen Drahtes oder eines Gelenks.

Aus der US 4 593 719 A ist ein Ventil bekannt dessen Ventilschieber über zylindrische Endabschnitte verfügt, in denen Ringnuten ausgebildet sind, die der Zentrierung und Führung des Ventilschiebers dienen. Einen vergleichbaren Aufbau hat auch ein in der US 1 820 653 A offenbartes Ventil.

Es ist die Aufgabe der vorliegenden Erfindung, ein Mehrwegeventil zu schaffen, das trotz fertigungsbedingter Formfehler des Ventilschiebers einen reibungsarmen und präzisen Betrieb ermöglicht.

Zur Lösung dieser Aufgabe ist vorgesehen, dass die mindestens eine Speiseöffnung in mindestens einer axialen Stellung des Ventilschiebers von dem Lagerabschnitt abgedeckt ist und dass der Ventilschieber einstückig ausgebildet ist, wobei der Lagerabschnitt aufgrund der elastischen Biegbarkeit des Ventilschiebers durch die Fluidkraft des über die von ihm abgedeckte mindestens eine Speiseöffnung zuströmenden Druckfluides derart bezüglich der Steuerkammer ausrichtbar ist, dass sich zwischen dem Lagerabschnitt und der von ihm abgedeckten peripheren Wandfläche der Steuerkammer ein axial durchgehender, von dem eingespeisten Druckfluid durchströmter ringförmiger Fluidlagerspalt ausbildet.

Wenn man davon ausgeht, dass im unbeaufschlagten Zustand des Speisekanals aufgrund von Formfehlern ein Keilspalt zwischen dem Lagerabschnitt und der peripheren Wandfläche der Steuerkammer vorliegt, hat die radiale Einspeisung des Druckfluides zur Folge, dass sich der Lagerabschnitt aufgrund der asymmetrischen Druckbeaufschlagung zentrisch bezüglich der Steuerkammer ausrichtet. Derjenige Anteil der Fluidströmung, der ausgehend von der Speiseöffnung in der sich verengenden Richtung des Keilspalts strömt, ruft verglichen mit dem entgegengesetzt orientierten Strömungsanteil eine stärkere, radial orientierte Fluidkraft hervor, so dass auf den Lagerabschnitt quasi ein Drehmoment einwirkt, das ihn bezüglich der Steuerkammer koaxial zentriert. Ermöglicht wird der Ausrichtvorgang durch die zumindest partiell vorhandene elastische Biegbarkeit des Ventilschiebers, die beispielsweise dadurch realisiert werden kann, dass der sich an den Lagerabschnitt anschließende Stegabschnitt über einen relativ kleinen Querschnitt verfügt. Durch das Ausrichten des Lagerabschnittes bezüglich der Steuerkammer ergibt sich um den Lagerabschnitt herum ein ringförmiger, axial durchgehender Spalt, der von dem zuströmenden Druckfluid durchströmt wird und der als Fluidlagerspalt bezeichnet werden kann, weil er einen hydrodynamischen Lagerungseffekt hervorruft.

Je nachdem, in welchem Bereich des Außenumfanges des Lagerabschnittes die mindestens eine Speiseöffnung platziert ist, wird der Fluidlagerspalt von dem eingespeisten Druckfluid im Wesentlichen in nur einer axialen Richtung oder, indem sich der Fluidstrom aufspaltet, in den beiden einander entgegengesetzten axialen Richtungen durchströmt. In Abhängigkeit von der zwischen dem Ventilschieber und der mindestens einen Speiseöffnung eingenommenen Relativposition kann das Längenverhältnis der beiden in einander entgegengesetzten Richtungen durchströmten Längenabschnitte des Fluidlagerspaltes variieren.

Durch die erfindungsgemäßen Maßnahmen wird ein druckzentrierender, reibungs- und verschleißmindernder Lagerungseffekt erzielt, der vor allem bei sogenannten hartdichtenden Ventilschiebern besonders vorteilhaft ist und der sich allein durch die radiale Druckbeaufschlagung des mindestens einen für die Lagerung des Ventilschiebers maßgeblichen Lagerabschnittes einstellt.

Das Lagerungsprinzip ist bei Schieberventilen sowohl in der Hydraulik als auch in der Pneumatik oder auch bei anderen Fluidmedien einsetzbar. Es eignet sich sowohl für Schaltventile als auch für Stetigventile. Grundvoraussetzung für die Funktionsfähigkeit ist lediglich eine radiale Druckbeaufschlagung des durch eine Schrägstellung des Lagerabschnittes bedingten Keilspalts in Verbindung mit einer ausreichenden Biegeelastizität des Ventilschiebers zur Ermöglichung der Ausrichtung des Lagerabschnittes durch Verbiegen relativ zu mindestens einem anderen, sich an der peripheren Wandfläche der Steuerkammer abstützenden Abschnitt des Ventilschiebers.

Vorteilhafte Weiterbildungen der Erfindung gehen aus den Unteransprüchen hervor.

Zweckmäßigerweise ist das Mehrwegeventil so aufgebaut, dass der zur Bildung des Fluidlagerspaltes - bei pneumatischen Anwendungen ist dies ein Luftlagerspalt - dienende Lagerabschnitt zwei Steuerkammerabschnitte axial voneinander abteilt, die zumindest in derjenigen Stellung des Ventilgliedes, in der der Lagerabschnitt die mindestens eine Steueröffnung abdeckt, an ein Druckniveau angeschlossen oder anschließbar sind, das geringer ist als dasjenige, das an der mindestens einen Steueröffnung anliegt. Auf diese Weise ist unter allen Umständen die angestrebte, den hydrodynamischen Lagerungseffekt erzielende Fluidströmung gewährleistet.

Vorzugsweise ist einer von zwei durch den Lagerabschnitt voneinander abgeteilten Steuerkammerabschnitten an einen Entlastungskanal angeschlossen, der mit einem atmosphärischen Druckniveau verbunden ist, beispielsweise unmittelbar mit der Umgebung oder mit einem Tank. Der andere Steuerkammerabschnitt kann in vergleichbarer Weise an einem atmosphärischen Druckniveau liegen oder aber - insbesondere wenn der Lagerabschnitt zugleich als Steuerabschnitt genutzt wird - mit einem Arbeitskanal kommunizieren, an den ein anzusteuernder Verbraucher anschließbar ist.

Obgleich das erfindungsgemäße Lagerungsprinzip auch bei ebenen Dichtflächen anwendbar ist, empfiehlt sich eine Ausgestaltung des Ventilschiebers nach Art eines Kolbenschiebers mit einer runden, insbesondere kreisrunden Außenkontur.

Ist der Ventilschieber kolbenförmig ausgebildet, können am Außenumfang des Lagerabschnittes mehrere ringförmige Druckentlastungsnuten konzentrisch zum Ventilschieber und mit axialem Abstand zueinander angeordnet sein. Mittels solcher Druckentlastungsnuten kann durch eine entsprechende Dimensionierung bei Bedarf eine Verstärkung oder Abschwächung der Lagerungskräfte erzielt werden.

Wie schon angedeutet wurde, kann das Mehrwegeventil so ausgebildet sein, dass der mindestens eine Lagerabschnitt zugleich einen Steuerabschnitt bildet, der zur Steuerung von Fluidströmen genutzt wird, mit denen ein angeschlossener Verbraucher angesteuert werden soll. Ein solcher Steuerabschnitt zeichnet sich insbesondere dadurch aus, dass er in mindestens einer axialen Stellung des Ventilschiebers derart axial neben der mindestens einen Steueröffnung angeordnet ist, dass er selbige nur noch teilweise oder überhaupt nicht mehr abdeckt. Auf diese Weise liegt eine offene Fluidverbindung zwischen der zumindest partiell unabgedeckten Steueröffnung und einem ebenfalls in die Steuerkammer einmündenden, mit einem anzusteuernden Verbraucher verbindbaren Arbeitskanal vor.

Das erfindungsgemäße Lagerungsprinzip kann lediglich einseitig an dem Ventilschieber zur Anwendung kommen. Zweckmäßigerweise wird es jedoch an beiden Endbereichen des Ventilschiebers realisiert. In diesem Fall verfügt der Ventilschieber vorzugsweise an beiden einander entgegengesetzten Endbereichen über jeweils einen sich an einen Stegabschnitt geringeren Querschnittes anschließenden Lagerabschnitt, dem mindestens eine für den Aufbau der Lagerkräfte genutzte Speiseöffnung zugeordnet ist und der zur Ausbildung eines Fluidlagerspaltes in dem oben erläuterten Sinne herangezogen wird.

Verfügt ein Ventilschieber über zwei zueinander beabstandete, endseitige Lagerabschnitte, kann mit axialem Abstand zwischen den beiden Lagerabschnitten mindestens ein Steuerabschnitt vorhanden sein, der mit den beiden Lagerabschnitten über je einen im Querschnitt reduzierten Stegabschnitt in Verbindung steht. Auf diese Weise kann beispielsweise ein 5/3-Wegeventil realisiert werden.

Der Ventilschieber besteht zweckmäßigerweise aus Metall. Andere Werkstoffe wären allerdings prinzipiell ebenfalls denkbar.

Das erfindungsgemäße Lagerungsprinzip erweist sich vor allem bei hartdichtenden Ventilkonzepten von Vorteil, bei denen für die Abdichtung zwischen dem Ventilschieber und der peripheren Wandfläche der Steuerkammer keine zusätzlichen Elastomerdichtungen zum Einsatz kommen. Allerdings wird die Anwendung des Lagerungsprinzips auf Mehrwegeventile, die über zusätzliche Elastomerdichtungen verfügen, nicht ausgeschlossen.

Nachfolgend wird die Erfindung anhand der beiliegenden Zeichnung näher erläutert. In dieser zeigen:
- Figur 1: in schematischer Darstellung einen Längsschnitt durch ein Mehrwegeventil in einem Zustand, in dem das Lagerungssystem noch nicht druckbeaufschlagt und die Lagerabschnitte mithin noch nicht ausgerichtet beziehungsweise zentriert sind, und
- Figur 2: das Mehrwegeventil aus Figur 1 im aktivierten Zustand des Lagerungssystems mit entsprechend ausgerichteten beziehungsweise zentrierten Lagerabschnitten des Ventilschiebers.

Das aus der Zeichnung ersichtliche Mehrwegeventil 1 kann zur Steuerung von Fluidströmen beliebiger Art eingesetzt werden. Ein typischer Anwendungsfall ist die Steuerung der Strömung eines Druckfluides zu und von einem in der Zeichnung schematisch angedeuteten Verbraucher 2, bei dem es sich beispielsweise um eine fluidbetätigte Antriebsvorrichtung handelt.

Das gesteuerte Druckfluid ist in der Regel entweder Druckluft oder Drucköl. Andere fluidische Medien können aber ebenfalls gesteuert werden.

Das Mehrwegeventil 1 des Ausführungsbeispiels ist als 5/3-Wegeventil konzipiert. Die Erfindung lässt sich jedoch auch bei Ventilen mit anderer Funktionalität verwirklichen.

Das Mehrwegeventil 1 verfügt über ein Ventilgehäuse 3, in dem sich eine längliche, eine Längsachse 4 aufweisende Steuerkammer 5 befindet. Die Steuerkammer 5 hat zweckmäßigerweise einen runden, bevorzugt kreisrunden Querschnitt. Umfangsseitig ist die Steuerkammer 5 von einer als periphere Wandfläche 6 bezeichneten Wandfläche begrenzt, die beim Ausführungsbeispiel unmittelbar vom Ventilgehäuse 3 gebildet ist. Es wäre allerdings auch denkbar, die periphere Wandfläche 6 an einer in das Ventilgehäuse 3 eingesetzten Führungshülse oder Führungspatrone auszubilden.

Stirnseitig ist die Steuerkammer 5 einerseits von einer ersten Abschlusswand 7 und andererseits von einer zweiten Abschlusswand 8 begrenzt. Diese beiden Abschlusswände 7, 8 sind bezüglich des Ventilgehäuses 3 ortsfest angeordnet.

Das Ventilgehäuse 3 ist von mehreren Ventilkanälen 12 durchsetzt, die an axial zueinander beabstandeten Stellen an der peripheren Wandfläche 6 umfangsseitig in die Steuerkammer 5 einmünden. Beim Ausführungsbeispiel sind fünf solcher Ventilkanäle 12 vorhanden.

Die beiden äußeren Ventilkanäle 12 bilden einen ersten und zweiten Speisekanal 12a, 12b. Jeder dieser beiden Speisekanäle 12a, 12b ist ausgebildet, um an eine das zu steuernde Druckfluid liefernde Druckquelle P angeschlossen werden zu können.

Der erste Speisekanal 12a mündet über zwei erste Speiseöffnungen 13a in die Steuerkammer 5 ein, der zweite Speisekanal 12b über zwei zweite Speiseöffnungen 13b.

Axial zwischen den ersten und zweiten Speiseöffnungen 13a, 13b mündet mit zwei Abführöffnungen 14 ein als Abführkanal 12c ausgebildeter Ventilkanal 12 in die Steuerkammer 5 ein. Der Abführkanal 12c ist im Betrieb des Mehrwegeventils 1 an Atmosphärendruck R angeschlossen, wobei er bei einem pneumatischen Druckfluid mit der Atmosphäre verbunden ist und bei einem hydraulischen Druckfluid mit einem Tank.

Zwei weitere Ventilkanäle 12 bilden einen ersten und zweiten Arbeitskanal 12d, 12e. Der erste Arbeitskanal 12d mündet über zwei erste Arbeitsöffnungen 15a in dem zwischen den Abführöffnungen 14 und den ersten Speiseöffnungen 13a liegenden Bereich in die Steuerkammer 5 ein. Der zweite Arbeitskanal 12e kommuniziert in vergleichbarer Weise über zwei zweite Arbeitsöffnungen 15b mit der Steuerkammer 5, wobei diese zweiten Arbeitsöffnungen 15b axial zwischen den Abführöffnungen 14 und den zweiten Speiseöffnungen 13b platziert sind.

Die beiden Arbeitskanäle 12d, 12e sind ausgebildet, um mindestens einen anzusteuernden Verbraucher 2 anschließen zu können, wie dies in der Zeichnung schematisch angedeutet ist.

Die Ventilkanäle 12 können abweichend vom Ausführungsbeispiel auch mit jeweils nur einer oder mit mehr als zwei Öffnungen an der peripheren Wandfläche 6 in die Steuerkammer 5 einmünden.

In der Steuerkammer 5 ist ein bevorzugt kolbenförmig ausgebildeter Ventilschieber 16 axial verschiebbar gelagert. Der Ventilschieber 16 sorgt in Abhängigkeit von seiner Schaltstellung für unterschiedliche Verbindungsmuster zwischen den genannten Ventilkanälen 12. Auf diese Weise ist er für die Steuerung von Fluidströmen zu und von dem gegebenenfalls angeschlossenen Verbraucher 2 verantwortlich.

Zum Umschalten beziehungsweise axialen Bewegen des Ventilschiebers 16 ist das Mehrwegeventil 1 mit einer nur strichpunktiert angedeuteten Antriebseinheit 17 ausgestattet. Selbige arbeitet beim Ausführungsbeispiel mittels Fluidkraft. Sie enthält mindestens einen mit dem Ventilschieber 16 bewegungsgekoppelten Antriebskolben 18, der über zwei Antriebskanäle 22 in der einen oder anderen Richtung mit einem Betätigungsfluid beaufschlagbar ist, so dass er sich gemäß Doppelpfeil 23 in der einen oder anderen axialen Richtung bewegt und dabei den Ventilschieber 16 mitnimmt.

Abweichend von dem gezeigten Antriebsprinzip, bei dem ein einziger, doppeltwirkend beaufschlagbarer Antriebskolben 18 vorhanden ist, könnten auch zwei gesonderte Antriebskolben 18 vorhanden sein. Außerdem wäre es möglich, den Ventilschieber 16 beispielsweise direkt elektromagnetisch oder auch rein mechanisch zu bewegen.

Die mögliche Umschaltbewegung des Ventilschiebers 16 ist bei 24 durch einen Doppelpfeil angedeutet. Sie verläuft in Achsrichtung der Längsachse 4 in wahlweise der einen oder anderen axialen Richtung.

Das Mehrwegeventil 1 kann als Schaltventil oder als Stetigventil ausgebildet sein. Bei einer Ausführung als Schaltventil können die diversen Kanäle jeweils wahlweise vollständig freigegeben oder verschlossen werden. Eine Ausgestaltung als Stetigventil ermöglicht auch stufenlose Zwischenstellungen zur beliebigen Variation der Strömungsrate des zu steuernden Druckfluides.

In Anpassung an die runde Querschnittsform der Steuerkammer 5 verfügt der Ventilschieber 16 des Ausführungsbeispiels über eine runde Außenkontur und ist zweckmäßigerweise als sogenannter Kolbenschieber ausgebildet.

Der Ventilschieber 16 verfügt an seinen beiden einander entgegengesetzten axialen Endbereichen 25, 26 über je einen Lagerabschnitt, die im Folgenden zur besseren Unterscheidung als erster und zweiter Lagerabschnitt 27, 28 bezeichnet seien. Diese Lagerabschnitte 27, 28 haben eine an die Querschnittskontur der Steuerkammer 5 angepasste runde Außenkontur und sind daher beim Ausführungsbeispiel im Wesentlichen zylindrisch gestaltet.

Zweckmäßigerweise bildet der erste Lagerabschnitt 27 gleichzeitig einen zur Fluidsteuerung dienenden ersten Steuerabschnitt 32 und der zweite Lagerabschnitt 28 bildet gleichzeitig einen ebenfalls zur Fluidsteuerung dienenden zweiten Steuerabschnitt 33.

Die Lagerabschnitte 27, 28 sind maßgeblich für die gleitverschiebliche und verkippsichere Lagerung des Ventilschiebers 16 im Innern der Steuerkammer 5 verantwortlich, wobei sie sich mit ihrem Außenumfang 35 an der peripheren Wandfläche 6 abstützen.

Aufgrund ihrer gleichzeitigen Funktion als Steuerabschnitte 32, 33 wirken sie außerdem an der Steuerung des das Mehrwegeventil 1 durchströmenden Druckfluides mit. Prinzipiell wäre allerdings auch eine Bauform denkbar, bei der sie keine gleichzeitige Funktion als Steuerabschnitt übernehmen.

Der Ventilschieber 16 verfügt außerdem über einen ebenfalls an die Querschnittskontur der Steuerkammer 5 angepassten dritten Steuerabschnitt 34, der axial zwischen dem ersten und zweiten Steuerabschnitt 32, 33 angeordnet und dabei zu sowohl dem ersten als auch dem zweiten Steuerabschnitt axial beabstandet ist.

Der Ventilschieber 16 verfügt des Weiteren über einen den ersten Steuerabschnitt 32 mit dem dritten Steuerabschnitt 34 verbindenden ersten Stegabschnitt 36 sowie über einen den zweiten Steuerabschnitt 33 mit dem dritten Steuerabschnitt 34 verbindenden zweiten Stegabschnitt 37. Die beiden Stegabschnitte 36, 37, die beispielsweise stabförmig ausgebildet sein können, haben einen wesentlich geringeren Querschnitt als die Steuerabschnitte 32, 33, 34. Auf diese Weise verfügt der Ventilschieber 16 zwischen den jeweils axial benachbarten Steuerabschnitten 32, 33; 33, 34 über eine ringförmige Einschnürung 38.

Der Ventilschieber 16 kann in einer aus der Zeichnung ersichtlichen Neutralstellung positioniert werden. Hierbei sind die beiden Lagerabschnitte 27, 28 so positioniert, dass der erste Lagerabschnitt 27 die ersten Speiseöffnungen 13a und der zweite Lagerabschnitt 28 die zweiten Speiseöffnungen 13b abdeckt. Außerdem nimmt der dritte Steuerabschnitt 34 eine die Abführöffnungen 14 abdeckende Stellung ein. Auf diese Weise sind die beiden Arbeitskanäle 12d, 12e sowohl von der Druckversorgung P als auch von der Drucksenke R abgetrennt und das in ihnen enthaltene Fluidvolumen ist eingesperrt.

Ausgehend von der Neutralstellung kann der Ventilschieber axial in entweder die eine oder andere Richtung verlagert werden, um entweder eine erste oder zweite Arbeitsstellung einzunehmen.

In der ersten Arbeitsstellung hat der zugleich einen ersten Steuerabschnitt 32 bildende erste Lagerabschnitt 27 die ersten Speiseöffnungen 13a zumindest teilweise und zweckmäßigerweise vollständig freigegeben und der dritte Steuerabschnitt 34 befindet sich axial zwischen den ersten Arbeitsöffnungen 15a und den Abführöffnungen 14. Der zweite Lagerabschnitt 28 hat dabei zwar auch seine Axialposition verändert, deckt allerdings die zweiten Speiseöffnungen 13b weiterhin ab und endet vor den zweiten Arbeitsöffnungen 15b. Auf diese Weise ist über die eine Einschnürung 38 hinweg eine offene Fluidverbindung zwischen den ersten Speiseöffnungen 13a und den ersten Arbeitsöffnungen 15a freigegeben, während gleichzeitig die andere Einschnürung 38 eine Fluidverbindung zwischen den zweiten Arbeitsöffnungen 15b und den Abführöffnungen 14 freigibt.

In der entgegengesetzten zweiten Arbeitsstellung sind die Verhältnisse gerade umgekehrt, so dass die zweiten Arbeitsöffnungen 15b mit den zweiten Speiseöffnungen 13b und die ersten Arbeitsöffnungen 15a mit den Abführöffnungen 14 verbunden sind.

Aus den bisherigen Erläuterungen ist ersichtlich, dass an der peripheren Wandfläche 6 der Steuerkammer 5 zwei Speisekanäle 12a, 12b so einmünden, dass die zugeordneten Speiseöffnungen 13a beziehungsweise 13b in mindestens einer Schaltstellung des Ventilschiebers 16 vom zugeordneten Lagerabschnitt 27, 28 abgedeckt sind. Der betreffende Lagerabschnitt 27, 28 ist dann so positioniert, dass sein Außenumfang 35 auf axialer Höhe der Speiseöffnungen 13a, 13b zu liegen kommt und diese überdeckt.

Jeder Lagerabschnitt 27, 28 hat eine auf der Seite des sich anschließenden Stegabschnittes 36, 37 angeordnete innere Stirnfläche 42 und eine axial entgegengesetzte äußere Stirnfläche 43. In mindestens einer Schaltstellung ist der Ventilschieber 16 zweckmäßigerweise so positioniert, dass die zugeordneten Speiseöffnungen 13a, 13b mit ihrem gesamten Öffnungsquerschnitt in dem zwischen der inneren und der äußeren Stirnfläche 42, 43 liegenden Bereich des Lagerabschnittes 27, 28 zu liegen kommen.

Die vorgenannten Gegebenheiten stellen sich beim Ausführungsbeispiel für beide Lagerabschnitte 27, 28 ein, wenn sich der Ventilschieber 16 in der Neutralstellung befindet. In den beiden Arbeitsstellungen werden jeweils nur die Speiseöffnungen 13a beziehungsweise 13b des einen oder anderen Speisekanals 12a, 12b vollständig abgedeckt.

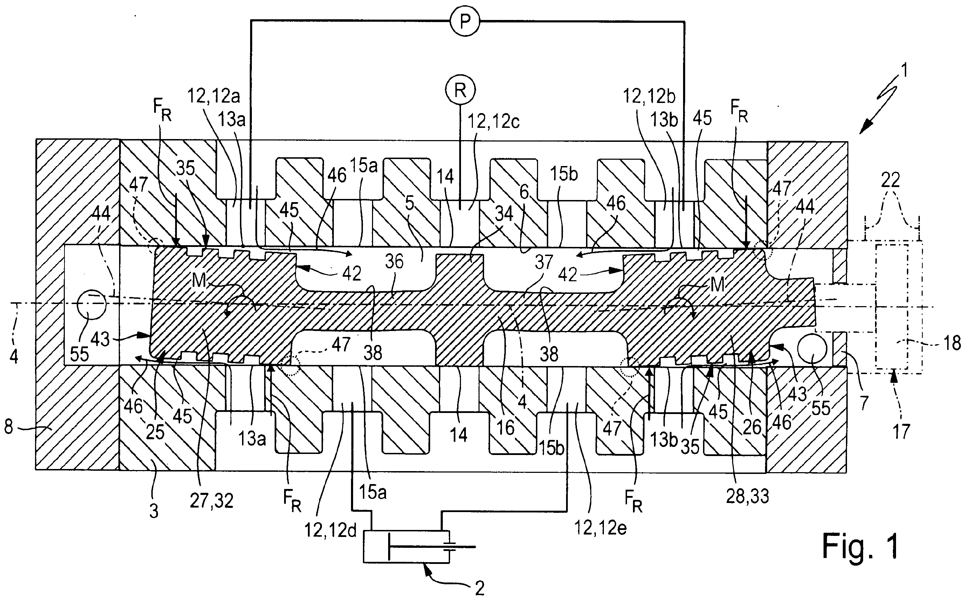

Die Figur 1 zeigt das Mehrwegeventil 1 im drucklosen Zustand. In stark übertriebener Form ist hierbei ersichtlich, dass der Ventilschieber 16 fertigungsbedingt eine leichte Krümmung aufweist, so dass die beiden Lagerabschnitte 27, 28 eine leicht gekippte Stellung einnehmen, in der ihre Längsachsen 44 eine gewisse Schrägstellung bezüglich der Längsachse 4 der Steuerkammer 5 aufweisen.

Eine Folge hiervon ist, dass sich in dem vom Lagerabschnitt 27, 28 überdeckten Längenabschnitt der Wandfläche 6 Keilspalte 45 ausbilden, also im Querschnitt keilförmig profilierte Zwischenräume. Die Ebene dieses Querschnittes ist von der Längsachse 4 und einer dazu rechtwinkeligen Achse aufgespannt.

Bezogen auf den Einmündungsbereich der zugeordneten Speiseöffnungen 13a, 13b erweitern sich die Keilspalte 45 in der einen axialen Richtung, während sie sich in der anderen axialen Richtung verengen.

Das über die Speiseöffnungen 13a, 13b zuströmende Druckmedium strömt somit vorwiegend in der Erweiterungsrichtung der Keilspalte 45, was durch Strömungspfeile 46 angedeutet ist.

Wie man aus Figur 1 entnehmen kann, sind die Keilspalte 45 an ihrer engsten Stelle dadurch verschlossen, dass der betreffende Lagerabschnitt 27, 28 mit seiner axialen Abschlusskante an der peripheren Wandfläche 6 anliegt. Solche Anlagebereiche sind in Figur 1 bei 47 kenntlich gemacht.

Das über die Speiseöffnungen 13a, 13b zuströmende Druckfluid strömt zwar maßgeblich über den sich erweiternden Längenabschnitt der Keilspalte 45 ab, wirkt aber auch in den anderen Bereichen der Keilspalte 45. Weil dort jedoch die Strömung durch die Querschnittsverengung gestaut wird, baut sich in den verengten Bereichen eine im Vergleich zu den sich erweiternden Bereichen der Keilspalte 45 größere radiale Fluidkraft F_{R} auf. Diese ruft an dem zugeordneten Lagerabschnitt 27, 28 ein Drehmoment M hervor, das versucht, die Lagerabschnitte 27, 28 so zu verkippen, dass deren Längsachsen 44 mit der Längsachse 4 der Steuerkammer 5 zusammenfallen und die Lagerabschnitte 27, 28 somit zentrisch bezüglich der Steuerkammer 5 ausgerichtet sind.

Tatsächlich können die Lagerabschnitte 27, 28 bei dem Mehrwegeventil 1 die erwähnte Kippbewegung ausführen, weil der Ventilschieber 16 zumindest partiell über ausreichend elastisch biegbare Eigenschaften verfügt.

Beim Ausführungsbeispiel resultieren diese biegbaren Eigenschaften vor allem daraus, dass die Stegabschnitte 36, 37 des bevorzugt einstückigen Ventilschiebers 16 einen relativ kleinen Querschnitt aufweisen und insbesondere auch im Verhältnis zur Querschnittsfläche des Lagerabschnittes 27, 28 über eine relativ kleine Querschnittsfläche verfügen. Dadurch bilden sich vor allem im Übergangsbereich zwischen dem Lagerabschnitt 27, 28 und dem sich anschließenden Stegabschnitt 36, 37 elastisch biegbare Bereiche aus, wobei aber auch zusätzlich oder alternativ der gesamte Stegabschnitt 36, 37 über entsprechend elastisch verformbare Eigenschaften verfügen kann.

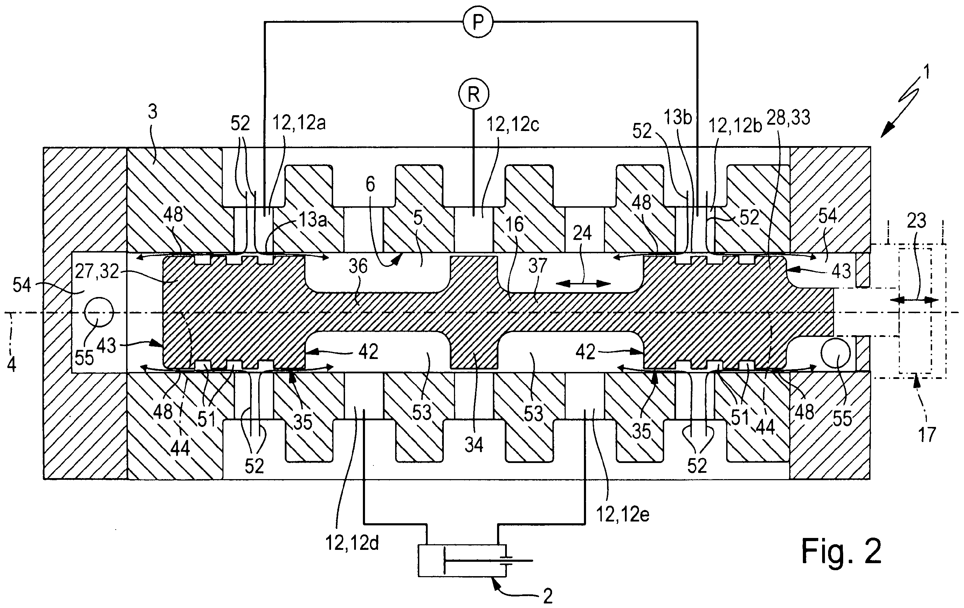

Die Figur 2 zeigt den Ventilschieber 16 im ausgerichteten beziehungsweise zentrierten Zustand der beiden Lagerabschnitte 27, 28. Hier verlaufen die Längsachsen 44 der Lagerabschnitte 27, 28 koaxial zur Längsachse 4 der Steuerkammer 5. Als Resultat hat sich radial zwischen dem Außenumfang 35 jedes Lagerabschnittes 27, 28 und dem vom Lagerabschnitt 27, 28 abgedeckten Längenabschnitt der peripheren Wandfläche 6 ein ringförmiger Fluidlagerspalt 48 ausgebildet, der sich axial durchgehend über die gesamte Länge des betreffenden Lagerabschnittes 27, 28 erstreckt und sowohl zur inneren wie auch zur äußeren Stirnfläche 42, 43 des Lagerabschnittes 27, 28 ausmündet. Dieser Fluidlagerspalt 48, der abgesehen von Bereichen, in denen sich optionale Druckentlastungsnuten 51 befinden, zweckmäßigerweise durchgehend eine im Wesentlichen konstante Spaltbreite aufweist, wird durch die mittels Pfeilen 52 verdeutlichte Fluidströmung des Druckfluides aufrechterhalten, das durch die Speiseöffnungen 13a, 13b zuströmt und durch den Fluidlagerspalt 48 hindurch axial zueinander entgegengesetzten Seiten abströmt.

Die zuvor schon erwähnten Druckentlastungsnuten 51 sind optional und können dazu dienen, die radialen Fluidkräfte, die auch als Lagerungskräfte bezeichenbar sind, zu verstärken oder abzuschwächen. Vorzugsweise sind mehrere ringförmige Druckentlastungsnuten 51 koaxial an jedem Lagerabschnitt 27, 28 angeordnet und im Außenumfang 35 ausgebildet. Die mehreren Druckentlastungsnuten 51 sind dabei axial mit Abstand zueinander angeordnet. Ein derart zentrierter Ventilschieber 16 lässt sich reibungsarm und somit verschleißarm betätigen und sehr präzise positionieren.

Exemplarisch besteht der Ventilschieber insgesamt aus Metall. Er könnte allerdings auch aus einem anderen Material oder einem Materialverbund hergestellt sein.

Durch jeden Lagerabschnitt 27, 28 werden zwei Steuerkammerabschnitte axial voneinander abgeteilt. Hierbei handelt es sich um einen sich an die innere Stirnfläche 42 anschließenden inneren Steuerkammerabschnitt 53 und einen sich an die äußere Stirnfläche 43 anschließenden äußeren Steuerkammerabschnitt 54. Die Fluidströmung durch den Fluidlagerspalt 48 in Richtung zum inneren Steuerkammerabschnitt 53 wird insbesondere dadurch unterstützt, dass dieser innere Steuerkammerabschnitt 53 entweder mit dem Abführkanal 12c oder mit einem der Arbeitskanäle 12d, 12e kommuniziert und somit in ihm ein Druckniveau herrscht, das geringer ist als dasjenige im zugeordneten Speisekanal 12a, 12b.

Um auch in der Gegenrichtung eine optimale Durchströmung des Fluidlagerspaltes 48 zu erzielen, ist es zweckmäßig, wenn der äußere Steuerkammerabschnitt 54 ständig ebenfalls an einem Druckniveau liegt, das geringer ist als dasjenige im Speisekanal 12a, 12b. Letzteres wird zweckmäßigerweise dadurch erreicht, dass in jeden äußeren Steuerkammerabschnitt 54 ein Entlastungskanal 55, 56 einmündet, der andererseits mit einem atmosphärischen Druckniveau kommuniziert, indem er beispielsweise bei pneumatischen Anwendungen mit der Atmosphäre und bei hydraulischen Anwendungen mit dem Fluidtank verbunden ist.

Das Mehrwegeventil 1 könnte abweichend vom Ausführungsbeispiel auch so gestaltet sein, dass die Lagerabschnitte 27, 28 nicht zugleich als Steuerabschnitte 32, 33 fungieren. In diesem Falle würde das hinsichtlich seiner Fluidströmung zu steuernde Druckfluid über mindestens einen weiteren Speisekanal in die Steuerkammer 5 eingespeist werden.

Das erfindungsgemäße Lagerungskonzept kann im Übrigen auch bei solchen Mehrwegeventilen 1 eingesetzt werden, die an nur einem ihrer Endbereiche über einen Lagerabschnitt verfügen. Dies kann beispielsweise dann der Fall sein, wenn der Ventilschieber 16 an seinem anderen Endbereich direkt an einer Antriebseinrichtung 17 so befestigt ist, dass er durch mechanische Zwänge die erforderliche Ausrichtung aufweist.

Beim Ausführungsbeispiel ist der Ventilschieber 16 hartdichtend ausgebildet. Die notwendige Dichtfunktion bezüglich der peripheren Wandfläche 6 wird hier ohne gummielastische beziehungsweise elastomere Dichtungsmittel allein durch die exakte Einpassung in die Steuerkammer 5 realisiert. Allerdings kann das Konzept einer Fluidlagerung auch bei Ventilschiebern angewandt werden, bei denen zur Abdichtung gegenüber der peripheren Wandfläche 6 Weichdichtungen zum Einsatz kommen.

## Patentansprüche

1. Mehrwegeventil, mit einem Ventilgehäuse (3), in dem sich eine von einer peripheren Wandfläche (6) begrenzte längliche Steuerkammer (5) befindet, in der ein Ventilschieber (16) axial verschiebbar angeordnet ist, der an wenigstens einem Endbereich (25, 26) einen einen Längenabschnitt der peripheren Wandfläche (6) abdeckenden Lagerabschnitt (27, 28) aufweist, an den sich ein Stegabschnitt (36, 37) geringeren Querschnittes anschließt, wobei an der peripheren Wandfläche (6) ein zur Einspeisung eines Druckfluides dienender Speisekanal (12, 12a, 12b) mit mindestens einer Speiseöffnung (13a, 13b) einmündet, wobei der Ventilschieber (16) zumindest partiell derart elastisch biegbar ausgebildet ist, dass der Lagerabschnitt (27, 28) relativ zu mindestens einem anderen, sich an der peripheren Wandfläche (6) der Steuerkammer (5) abstützenden Abschnitt des Ventilschiebers (16) verbiegbar ist, **dadurch gekennzeichnet, dass** die mindestens eine Speiseöffnung (13a, 13b) in mindestens einer axialen Stellung des Ventilschiebers (16) von dem Lagerabschnitt (27, 28) abgedeckt ist und dass der Ventilschieber (16) einstückig ausgebildet ist, wobei der Lagerabschnitt (27, 28) aufgrund der elastischen Biegbarkeit des Ventilschiebers (16) durch die Fluidkraft des über die von ihm abgedeckte mindestens eine Speiseöffnung (13a, 13b) zuströmenden Druckfluides derart bezüglich der Steuerkammer (5) ausrichtbar ist, dass sich zwischen dem Lagerabschnitt (27, 28) und der von ihm abgedeckten peripheren Wandfläche (6) der Steuerkammer (5) ein axial durchgehender, von dem eingespeisten Druckfluid durchströmter ringförmiger Fluidlagerspalt (48) ausbildet.

2. Mehrwegeventil nach Anspruch 1, **dadurch gekennzeichnet, dass** der Fluidlagerspalt (48) von dem eingespeisten Druckfluid ausgehend von der mindestens einen abgedeckten Speiseöffnung (13a, 13b) in beiden einander entgegengesetzten axialen Richtungen durchströmbar ist.

3. Mehrwegeventil nach Anspruch 1 oder 2, **dadurch gekennzeichnet, dass** der mindestens eine Lagerabschnitt (27, 28) zwei Steuerkammerabschnitte (53, 54) axial voneinander abteilt, die zumindest in dem von dem Lagerabschnitt (27, 28) abgedeckten Zustand der mindestens einen Speiseöffnung (13a, 13b) an ein Druckniveau angeschlossen oder anschließbar sind, das geringer ist als dasjenige des an der mindestens einen Speiseöffnungen (13a, 13b) zugeführten Druckfluides.

4. Mehrwegeventil nach einem der Ansprüche 1 bis 3, **dadurch gekennzeichnet, dass** der mindestens eine Lagerabschnitt (27, 28) zwei Steuerkammerabschnitte (53, 54) axial voneinander abteilt, in deren einen (54) ein an atmosphärischem Druckniveau liegender Entlastungskanal (55) und in deren anderen (53) ebenfalls ein solcher Entlastungskanal oder ein mit einem anzusteuernden Verbraucher verbindbarer Arbeitskanal (12d, 12e) einmündet.

5. Mehrwegeventil nach einem der Ansprüche 1 bis 4, **dadurch gekennzeichnet, dass** der Ventilschieber (16) kolbenförmig mit runder Außenkontur ausgebildet ist.

6. Mehrwegeventil nach einem der Ansprüche 1 bis 5, **dadurch gekennzeichnet, dass** der Lagerabschnitt (27, 28) eine runde Außenkontur aufweist und an seinem Außenumfang mehrere mit axialem Abstand zueinander angeordnete ringförmige Druckentlastungsnuten (51) aufweist.

7. Mehrwegeventil nach einem der Ansprüche 1 bis 6, **dadurch gekennzeichnet, dass** der mindestens eine Lagerabschnitt (27, 28) zugleich einen Steuerabschnitt (32) bildet und bei mindestens einer Stellung des Ventilschiebers (16) derart axial neben der mindestens einen Speiseöffnung (13a, 13b) angeordnet ist, dass er selbige nicht mehr oder zumindest nicht mehr vollständig abdeckt und dadurch eine offene Fluidverbindung zwischen der zumindest partiell unabgedeckten Speiseöffnung (13a, 13b) und einem ebenfalls in die Steuerkammer (5) einmündenden, mit einem anzusteuernden Verbraucher verbindbaren Arbeitskanal (12, 12d, 12e) hergestellt ist.

8. Mehrwegeventil nach einem der Ansprüche 1 bis 7, **dadurch gekennzeichnet, dass** der Ventilschieber (16) an beiden einander entgegengesetzten Endbereichen (25, 26) jeweils einen sich an einen Stegabschnitt (36, 37) geringeren Querschnittes anschließenden Lagerabschnitt (27, 28) aufweist, wobei jedem dieser beiden Lagerabschnitte (27, 28) mindestens eine zur Ausbildung eines Fluidlagerspaltes (48) abgedeckte oder abdeckbare Speiseöffnung (13a, 13b) zugeordnet ist.

9. Mehrwegeventil nach einem der Ansprüche 1 bis 8, **dadurch gekennzeichnet, dass** der Ventilschieber (16) zwei endseitige, zweckmäßigerweise jeweils zugleich einen Steuerabschnitt (32, 33) bildende Lagerabschnitte (27, 28) aufweist und darüber hinaus über einen zwischen den beiden Lagerabschnitten (27, 28) angeordneten und über je einen Stegabschnitt (36, 37) mit den beiden Lagerabschnitten (27, 28) verbundenen Steuerabschnitt (34) verfügt.

10. Mehrwegeventil nach einem der Ansprüche 1 bis 9, **dadurch gekennzeichnet, dass** der Ventilschieber (16) zum Erhalt der das Ausrichten des Lagerabschnittes (27, 28) ermöglichenden Beweglichkeit im Übergangsbereich zwischen dem Lagerabschnitt (27, 28) und dem sich anschließenden Stegabschnitt (36, 37) und/oder im Bereich des Stegabschnittes (36, 37) elastisch biegbar ausgebildet ist.

11. Mehrwegeventil nach einem der Ansprüche 1 bis 10, **dadurch gekennzeichnet, dass** zwischen dem Ventilschieber (16) und der den Ventilschieber (16) umschließenden peripheren Wandfläche (6) der Steuerkammer (5) keine zusätzlichen Dichtungsmittel angeordnet sind.

12. Mehrwegeventil nach einem der Ansprüche 1 bis 11, **dadurch gekennzeichnet, dass** der Ventilschieber (16) ohne elastomere Dichtungsmittel hartdichtend mit der peripheren Wandfläche (6) der Steuerkammer (5) zusammenwirkt.

13. Mehrwegeventil nach einem der Ansprüche 1 bis 12, **dadurch gekennzeichnet, dass** der Ventilschieber (16) aus Metall besteht.

14. Mehrwegeventil nach einem der Ansprüche 1 bis 13, **gekennzeichnet durch** eine Ausgestaltung zur Steuerung eines gasförmigen oder eines flüssigen Druckfluides.

## Claims

1. Multiway valve with a valve casing (3) containing an elongated control chamber (5) bounded by a peripheral wall surface (6) and in which is mounted, with axial movement capability, a valve spool (16) which has on at least one end section (25, 26) a bearing section (27, 28) covering a length section of the peripheral wall surface (6) and adjoined by a web section (36, 37) with a smaller cross-section, wherein at the peripheral wall surface (6) a feed passage (12, 12a, 12b) with at least one feed port (13a, 13b) serving for the supply of a pressurised fluid leads in, wherein the valve spool (16) is made at least partially elastically bendable, so that the bearing section (27, 28) is bendable relative to at least one other section of the valve spool (16) resting on the peripheral wall surface (6) of the control chamber (5), **characterised in that** the feed port or ports (13a, 13b) is or are covered by the bearing section (27, 28) in at least one axial position of the valve spool (16), and that the valve spool (16) is made in one piece, wherein the bearing section (27, 28) may be so aligned relative to the control chamber (5) by the fluid power of the pressurised fluid flowing through the feed port or ports (13a, 13b) covered by it, owing to the elastic flexibility of the valve spool (16), that an axially continuous annular fluid bearing gap (48) through which the in-fed pressurised fluid flows, forms between the bearing section (27, 28) and the peripheral wall surface (6) of the control chamber (5) covered by it.

2. Multiway valve according to claim 1, **characterised in that** the in-fed pressurised fluid, starting from the covered feed port or ports (13a, 13b), is able to flow through the fluid bearing gap (48) in both opposite axial directions.

3. Multiway valve according to claim 1 or 2, **characterised in that** the bearing section or sections (27, 28) divides or divide axially from one another two control chamber sections (53. 54) which, at least in the state in which the feed port or ports (13a, 13b) are covered by the bearing section (27, 28), are or may be connected to a pressure level which is less than that of the pressurised fluid supplied at the feed port or ports (13a, 13b).

4. Multiway valve according to any of claims 1 to 3, **characterised in that** the bearing section or sections (27, 28) divides or divide axially from one another two control chamber sections (53. 54), into one (54) of which leads a vent passage (55) lying at atmospheric pressure level, and into the other (53) leads similarly such a vent passage or an operating passage (12d, 12e) which may be connected to a load to be actuated.

5. Multiway valve according to any of claims 1 to 4, **characterised in that** the valve spool (16) is piston-shaped with a round external contour.

6. Multiway valve according to any of claims 1 to 5, **characterised in that** the bearing section (27, 28) has a round external contour and has on its outer periphery several annular pressure venting slots (51) with axial clearance from one another.

7. Multiway valve according to any of claims 1 to 6, **characterised in that** the bearing section or sections (27, 28) at the same time form a control section (32) and in one or more positions of the valve spool (16) is or are so axially arranged next to the feed port or ports (13a, 13b) that it or they no longer or at least no longer completely cover, and in this way an open fluid connection is created between the at least partly uncovered feed port (13a, 13b) and an operating passage (12, 12d, 12e) likewise leading into the control chamber (5) and which may be connected to a load to be actuated.

8. Multiway valve according to any of claims 1 to 7, **characterised in that** the valve spool (16) has at each of two opposite end sections (25, 26) a bearing section (27, 28) adjoining a web section (36, 37) of smaller cross-section, wherein each of these two bearing sections (27, 28) is assigned at least one feed port (13a, 13b) which is or may be covered to form a fluid bearing gap (48).

9. Multiway valve according to any of claims 1 to 8, **characterised in that** the valve spool (16) has two end bearing sections (27, 28), each expediently forming at the same time a control section (32, 33), and in addition has a control section (34) arranged between the two bearing sections (27, 28) and connected to the two bearing sections (27, 28) via a web section (36. 37) in each case.

10. Multiway valve according to any of claims 1 to 9, **characterised in that** the valve spool (16), to obtain the mobility allowing alignment of the bearing section (27, 28) in the transition zone between the bearing section (27, 28) and the adjoining web section (36, 37) and/or in the area of the web section (36, 37), is made elastically bendable.

11. Multiway valve according to any of claims 1 to 10, **characterised in that** no additional sealing means are provided between the valve spool (16) and the peripheral wall surface (6) of the control chamber (5) encompassing the valve spool (16).

12. Multiway valve according to any of claims 1 to 11, **characterised in that** the valve spool (16) works in conjunction with the peripheral wall surface (6) of the control chamber (5) to provide a hard seal without elastomer sealing means.

13. Multiway valve according to any of claims 1 to 12, **characterised in that** the valve spool (16) is made of metal.

14. Multiway valve according to any of claims 1 to 13, **characterised by** a design for controlling a gaseous or liquid pressurised fluid.

## Revendications

1. Vanne à voies multiples, avec un boîtier de vanne (3), dans lequel se trouve une chambre de commande (5) allongée délimitée par une surface de paroi (6) périphérique, dans laquelle est disposé un coulisseau de vanne (16) de manière à pouvoir être déplacé de manière axiale, lequel présente, au niveau au moins d'une zone d'extrémité (25, 26), une section de palier (27, 28) recouvrant une section longitudinale de la surface de paroi (6) périphérique, à laquelle se raccorde une section formant élément de liaison (36, 37) présentant une section transversale inférieure, dans laquelle un canal d'alimentation (12, 12a, 12b), servant à injecter un fluide sous pression, pourvu au moins d'un orifice d'alimentation (13a, 13b) débouche au niveau de la surface de paroi (6) périphérique, dans laquelle le coulisseau de vanne (16) est réalisé au moins en partie de manière à pouvoir être cintré élastiquement de telle manière que la section formant palier (27, 28) peut être déformée par rapport à au moins une autre section, prenant appui au niveau de la surface de paroi (6) périphérique de la chambre de commande (5), du coulisseau de vanne (16), **caractérisée en ce que** l'au moins un orifice d'alimentation (13a, 13b) est recouvert, dans au moins une position axiale du coulisseau de vanne (16), par la section de palier (27, 28), et **en ce que** le coulisseau de vanne (16) est réalisé d'un seul tenant, dans laquelle la section de palier (27, 28) peut être orientée, du fait de la flexibilité élastique du coulisseau de vanne (16), par la force de fluide du fluide sous pression affluant par l'intermédiaire au moins d'un orifice d'alimentation (13a, 13b) qu'il recouvre, de telle manière par rapport à la chambre de commande (5) qu'il se forme, entre la section de palier (27, 28) et la surface de paroi (6) périphérique, qu'il recouvre, de la chambre de commande (5), une fente de palier à fluide (48) de forme annulaire continue axialement, traversée par le fluide sous pression injecté.

2. Vanne à voies multiples selon la revendication 1, **caractérisée en ce que** la fente de palier à fluide (48) peut être traversée par le fluide sous pression injecté en partant de l'au moins un orifice d'alimentation (13a, 13b) recouvert dans deux directions axialement opposées l'une à l'autre.

3. Vanne à voies multiples selon la revendication 1 ou 2, **caractérisée en ce que** l'au moins une section de palier (27, 28) sépare axialement l'une de l'autre deux sections de chambre de commande (53, 54), lesquelles sont raccordées ou peuvent être raccordées, au moins lorsque l'au moins un orifice d'alimentation (13a, 13b) est recouvert par la section de palier (27, 28), à un niveau de pression, qui est inférieur à celui du fluide sous pression amené au niveau de l'au moins un orifice d'alimentation (13a, 13b).

4. Vanne à voies multiples selon l'une quelconque des revendications 1 à 3, **caractérisée en ce que** l'au moins une section de palier (27, 28) sépare axialement l'une de l'autre deux sections de chambre de commande (53, 54), dans l'une (54) desquelles un canal de décharge (55) se situant à un niveau de pression atmosphérique débouche et dans l'autre (53) desquelles également un canal de décharge de ce type ou un canal de travail (12d, 12e) pouvant être relié à un consommateur à piloter débouche.

5. Vanne à voies multiples selon l'une quelconque des revendications 1 à 4, **caractérisée en ce que** le coulisseau de vanne (16) est réalisé de manière à présenter une forme de piston présentant un contour extérieur rond.

6. Vanne à voies multiples selon l'une quelconque des revendications 1 à 5, **caractérisée en ce que** la section de palier (27, 28) présente un contour extérieur rond et présente, au niveau de sa périphérie extérieure, plusieurs rainures de décharge de pression (51) de forme annulaire disposées à une distance axiale donnée les unes des autres.

7. Vanne à voies multiples selon l'une quelconque des revendications 1 à 6, **caractérisée en ce que** l'au moins une section de palier (27, 28) forme dans le même temps une section de commande (32) et est disposée, dans le cas au moins d'une position du coulisseau de vanne (16), de telle manière axialement à côté de l'au moins un orifice d'alimentation (13a, 13b) qu'il ne recouvre plus ou du moins plus complètement ce dernier et que de ce fait une communication fluidique ouverte est établie entre l'orifice d'alimentation (13a, 13b) au moins en partie non recouvert et un canal de travail (12, 12d, 12e) débouchant également dans la chambre de commande (5), pouvant être relié à un consommateur à piloter.

8. Vanne à voies multiples selon l'une quelconque des revendications 1 à 7, **caractérisée en ce que** le coulisseau de vanne (16) présente, au niveau de deux zones d'extrémité (25, 26) opposées l'une à l'autre, respectivement une section de palier (27, 28) se raccordant à une section d'élément de liaison (36, 37) présentant une section transversale inférieure, dans laquelle au moins un orifice d'alimentation (13a, 13b) recouvert ou pouvant être recouvert afin de réaliser une fente de palier à fluide (48) est associé à chacune des deux sections de palier (27, 28).

9. Vanne à voies multiples selon l'une quelconque des revendications 1 à 8, **caractérisée en ce que** le coulisseau de vanne (16) présente deux sections de palier (27, 28) situées côté extrémité, formant de manière appropriée respectivement dans le même temps une section de commande (32, 33) et dispose par ailleurs d'une section de commande (34) disposée entre les deux sections de palier (27, 28) et reliée aux deux sections de palier (27, 28) par l'intermédiaire respectivement d'une section d'élément de liaison (36, 37).

10. Vanne à voies multiples selon l'une quelconque des revendications 1 à 9, **caractérisée en ce que** le coulisseau de vanne (16) est réalisé de manière à pouvoir être cintré élastiquement, afin d'obtenir la mobilité permettant l'orientation de la section de palier (27, 28), dans la zone de transition entre la section de palier (27, 28) et la section d'élément de liaison (36, 37) se raccordant et/ou dans la zone de la section d'élément de liaison (36, 37).

11. Vanne à voies multiples selon l'une quelconque des revendications 1 à 10, **caractérisée en ce qu'**aucun moyen d'étanchéité supplémentaire n'est disposé entre le coulisseau de vanne (16) et la surface de paroi (6) périphérique, entourant le coulisseau de vanne (16), de la chambre de commande (5).

12. Vanne à voies multiples selon l'une quelconque des revendications 1 à 11, **caractérisée en ce que** le coulisseau de vanne (16) coopère avec la surface de paroi (6) périphérique de la chambre de commande (5) en assurant l'étanchéité de manière ferme sans moyens d'étanchéité élastomère.

13. Vanne à voies multiples selon l'une quelconque des revendications 1 à 12, **caractérisée en ce que** le coulisseau de vanne (16) est constitué de métal.

14. Vanne à voies multiples selon l'une quelconque des revendications 1 à 13, **caractérisée par** une configuration servant à commander un fluide sous pression sous forme gazeuse ou un fluide sous pression liquide.
